# EUROPÄISCHE PATENTSCHRIFT

(11) **EP 0 524 489 B1**
(45) Veröffentlichungstag und Bekanntmachung des Hinweises auf die Patenterteilung: **15.02.1995**
(21) Anmeldenummer: 92111604.2
(22) Anmeldetag: 08.07.1992
(51) Int. Cl.: F16B 39/30, F16B 39/28

(54) **Selbsthemmendes Gewinde**
Self-locking screw-thread
Filetage autobloquant

(30) Priorität: 25.07.1991 US 735435
(43) Veröffentlichungstag der Anmeldung: 27.01.1993
(60) Teilanmeldung: 93108231.7
(73) Patentinhaber: Härle, Anton, Prof. Dr., D-48161 Münster (DE)
(72) Erfinder: Härle, Anton, Prof. Dr., D-48161 Münster (DE)
(74) Vertreter: Habbel, Hans-Georg, Dipl.-Ing.

(56) Entgegenhaltungen:
- EP-A- 0 065 344
- EP-A- 0 441 224
- CH-A- 650 842
- DE-A- 2 645 519
- US-A- 4 586 861

## Beschreibung

Die Erfindung bezieht sich auf ein selbsthemmendes Gewinde gemäß dem Oberbegriff des Anspruches 1.

Ein gattungsbildendes, selbsthemmendes Gewinde wird z. B. in der DE-A-26 45 519 beschrieben, wobei dieses Gewinde sich dadurch kennzeichnet, daß der Gewindefuß zu einer schräg zur Gewindeachse verlaufenden Rampe ausgebildet ist und der Neigungswinkel der Rampe zur Gewindeachse jeweils konstant bleibend 15 bis 45°, vorzugsweise 20 bis 35° beträgt. Diese bekannte Anordnung hat den Nachteil, daß eine selbsthemmende Wirkung nur in einer Schraubrichtung erreichbar ist. In vielen Einsatzzwecken in der Technik ist esaber erwünscht, eine Mutter auf einer Gewindestange nach beiden Seiten arretieren zu können.

Außerdem ist bei diesem bekannten Gewinde gemäß der DE-A-26 45 519 die erforderliche Längsverschiebung, um zur Selbsthemmung zu kommen, relativ groß.

Aus der US-A-45 86 861 ist ebenfalls ein selbsthemmendes Gewinde bekanntgeworden, bei dem die bei der Einrichtung gemäß der DE-A-26 45 519 vorgesehene Rampe gewölbt ausgebildet ist. Durch diese Anordnung soll die Widerstandsfähigkeit gegen Vibrationen verbessert werden. Wie aber deutlich die Darstellung zeigt, ist bei dieser Anordnung immer noch ein Zurückrutschen des deformierten Grates des Zahnes von der Rampe zum Gewindetiefsten möglich.

Die Verriegelungswirkung bei selbstverriegelnden Gewinden hat u. a. ihre Grundlage in einer elastischen Deformation der Kontaktflächen der Gewindepartner. Nur solange eine gewisse Vorspannung gegeben ist, wird die Riegelwirkung aufrechterhalten.

Der bei den selbsthemmenden Gewinden auftretende radiale Druck kann dazu führen, daß sich das Muttergewinde radial dehnt, so daß dadurch die Verriegelungswirkung beeinträchtigt wird. Bei der Verschiebung des Bolzens auf der Klemmrampe der Mutter entsteht eine radialgerichtete Kraft, und dehnt sich dann die Mutter radial aus, verringert sich die elastische Vorspannung und damit die Verriegelungswirkung.

Der Erfindung liegt somit die Aufgabe zugrunde, die Mutter so auszugestalten, daß ein Ausdehnen der Mutter nach Möglichkeit verhindert wird.

Diese der Erfindung zugrundeliegende Aufgabe wird durch die kennzeichnenden Merkmale des Anspruches 1 gelöst.

Vorteil hafte Ausgestaltungen sind in den Unteransprüchen erläutert.

So können die Mutter umschließende Mantelauflagen oder extrem dehnungsresistente Bänder oder Ringe eingesetzt werden. Durch die Kombination unterschiedlicher Materialien mit unterschiedlichem Dehnungseffekt kann nicht nur die Verriegelungswirkung optimiert werden. Gleichzeitig ergeben sich auch Möglichkeiten der Materialeinsparung und Vorteile bei der größenmäßigen Dimensionierung.

Weiterhin wird vorgeschlagen, daß die Mutter an ihrer Außenseite eckig mit ungerader Eckenzahl ausgebildet ist, derart, daß die Außenseiten keine parallelen Flächen aufweisen. Vorzugsweise weist die Mutter eine dreieckförmige Form auf, jedoch auch andere Außenformen, die keine parallelen Flächen aufweisen, wie z. B. fünfeckige Außenformen wirken sich hier vorteilhaft aus.

Neben der eine optimale elastische Verformung ermöglichenden Form der Gewindepartner kann die elastische Vorspannung auch durch besondere Ausgestaltung der Auflageflächen von Mutter bzw. Bolzenkopf erreicht werden. Dadurch kann auch ohne maximales Anziehen ja sogar auch auf eine gewisse Distanz eine elastische Vorspannung erzeugt und aufrechterhalten werden, die den einen Gewindepartner in der Verriegelungsposition fixiert. Diese Ausgestaltung der Kontaktfläche von Mutter und Bolzen wirkt gleichsam wie eine Feder mit großer Rückstellkraft.

Eine optimale Riegelwirkung wird dann erzielt, wenn der überwiegende Teil der anliegenden Kräfte in der Querrichtung wirkt. Dies erfordert daher eine nahezu achsparallele Ausgestaltung der Klemmrampe. Wegen der elastischen Deformierung der Gewindespitzen muß jedoch eine gewisse Neigung vorliegen. Aufgrund der Toleranz muß die Neigung der Klemmrampe aber relativ groß sein, sonst kommt es zu keiner Riegelwirkung mehr, wenn die minimalste Schraube mit der maximalsten Mutter kombiniert werden soll.

Durch den Aufbau der Klemmrampe aus verschiedenen Abschnitten mit unterschiedlicher Neigung läßt sich das Toleranzproblem auf engstem Raum lösen und gleichzeitig eine optimale Riegelwirkung erzielen. Am Ende und am Anfang der Klemmfläche muß dabei die Neigung relativ groß, im zentralen Bereich dagegen relativ gering sein.

Die Teile mit großer Neigung können gerade oder gewölbt sein. Der Teil mit geringerer Neigung ist vorzugsweise gerade.

Der zentrale Teil weist eine Neigung auf, die zwischen 15° und 30° liegt, vorzugsweise aber 13° beträgt.

Ausführungsbeispiele der Erfindung werden nachfolgend anhand der Zeichnungen erläutert.

Die Zeichnungen zeigen dabei in
- Fig. 1: einen Querschnitt durch eine Schraubverbindung, in
- Fig. 2: einen Ausschnitt aus einem Gewindebereich, in
- Fig. 3: in einer schematisch und vergrößerten Darstellung die Ausbildung der Klemmrampen, in
- Fig. 4: eine erste Ausführungsform einer Mutter, die an ihrer Außenseite eckig ausgebildet ist, aber keine parallelen Flächen aufweist, in
- Fig. 5: eine abgeänderte Ausführungsform, in
- Fig. 6: eine Mutter aus unterschiedlichen Werkstoffen und in
- Fig. 7: eine abgeänderte Ausführungsform der Klemmrampe.

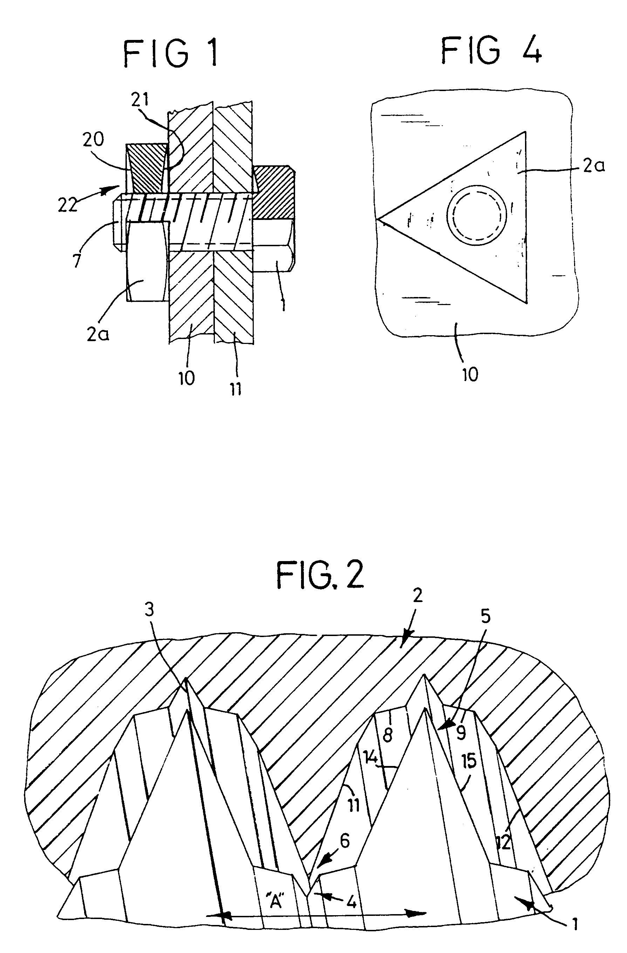

In Fig. 1 ist eine Schraubverbindung dargestellt mit einem Schraubbolzen 1, der ein Außengewinde 7 aufweist. Dieses Außengewinde 7 kämmt mit einem Innengewinde, das in einer Mutter 2a angeordnet ist. Wenn der beispielsweise sechseckig ausgebildete Schraubenkopf des Bolzens 1 gedreht wird und die beispielsweise dreieckig an ihrer Außenseite ausgebildete Mutter 2a festgelegt wird, zwingt das Gewinde 7 die Mutter 2a in Richtung auf den Schraubenkopf des Bolzens 1 zu und preßt dabei die beiden aneinander festzulegenden Bauteile 10 und 11 fest aufeinander. Außerdem ist aus Fig. 1 erkennbar, daß die Mutter 2a Auflageflächen 20 und 21 aufweist, die nicht parallel zu den Oberseiten der Bauteile 10 und 11 ausgerichtet sind, sondern diese Auflageflächen weisen eine Wölbung derart auf, daß die eigentliche Mutter im Normalfall nur im äußeren Randbereich an dem Bauteil 10 anliegt. Die Ausnehmung oder Wölbung kann konisch oder konkav sein und eine Neigung von 2° bis 20° besitzen.

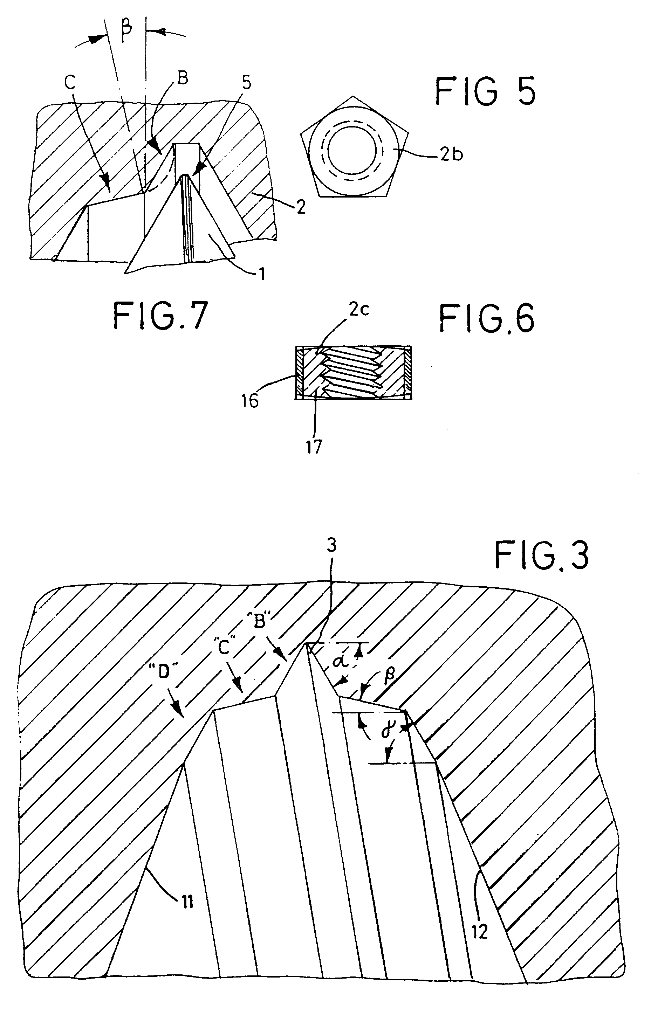

Die Ausbildung der Gewinde ist deutlicher aus Fig. 2 zu erkennen. In dieser Darstellung weist der Bolzen 1 einen Gewindefuß 4 auf und einen Grat 5. Eine Mutter 2 besitzt einen Grat 6 und einen Gewindefuß 3. Bei der dargestellten Ausführungsform sind sowohl im Bereich der Gewindefüße 4 des Bolzens 1 wie auch im Bereich der Gewindefüße 3 der Mutter 2 Klemmrampen 8 und 9 vorgesehen, deren genaue Ausbildung deutlicher aus der Darstellung in Fig. 3 ersichtlich ist.

An die Klemmrampen 8 und 9 schließen sich die Flankenbereiche 11 und 12 an und bei dem in Fig. 2 dargestellten Ausführungsbeispiel sind diese Flankenbereiche 11 und 12 nicht kongruent zu Flankenbereichen 14 und 15 des Bolzens 1.

In Fig. 2 ist die sogenannte Gewindeachse A eingezeichnet.

Wie Fig. 3 zeigt, setzt sich die eigentliche Klemmrampe z. B. aus drei unterschiedlichen Abschnitten zusammen, die in Fig. 2 mit B, C und D bezeichnet sind. Hierbei ist der Rampenabschnitt C der mittlere Bereich, der Rampenabschnitt B der dem Gewindefuß 3 am nächstenliegende Bereich und der Rampenabschnitt D der der nachfolgenden Flanke 11 bzw. 12 am nächstenliegende Bereich.

Die Rampenabschnitte B, C und D weisen nicht gleiche Neigung gegenüber der Gewindeachse A auf. So weist der Rampenabschnitt B gegenüber einer parallel zur Gewindeachse A verlaufenden Linie einen Winkel α auf, der beispielsweise 60° beträgt.

Der Rampenabschnitt C weist gegenüber einer parallel zur Gewindeachse A verlaufenden Linie einen Winkel β auf, der beispielsweise in einer Größenordnung zwischen 5 und 30° liegt. Vorzugsweise beträgt der Winkel β 13°.

Schließlich schließt der Rampenabschnitt D mit einer parallel zur Gewindeachse A verlaufenden Linie einen Winkel γ ein, der ebenfalls wieder etwa 60° beträgt. Die Winkel γ und α können von den genannten 60° in einer Größe von bis zu 20° abweichen.

Aus der vorausgehenden Erläuterung ist ersichtlich, daß auf jeden Fall der Klemmrampenabschnitt C eine kleinere Neigung als der Klemmrampenabschnitt B oder D besitzt.

Fig. 7 zeigt eine etwas abgeänderte Ausführungsform des vorher erläuterten Ausführungsbeispiels, nämlich bei dieser Darstellung sind nur zwei Klemmrampenabschnitte B und C vorgesehen. Auch hier trägt der Neigungswinkel des Abschnittes C gegenüber der Achse des Gewindes beispielsweise 13°, und dieser Winkel ist als Winkel β noch einmal eingezeichnet. Bei dieser Darstellung ist außerdem in besserer Anlehnung an die Praxis der Grat 5 abgerundet ausgebildet dargestellt. Auch ist durch die gestrichelte Darstellung des Abschnittes B verdeutlicht, daß auch bei dieser Ausführungsform der Abschnitt B gewölbt ausgebildet sein kann.

Bei der Darstellung in Fig. 3 sind die Rampenabschnitte B, C und D geradlinig dargestellt. Es ist selbstverständlich aber auch möglich, daß insbesondere die Rampenabschnitte B und D zum Gewindeinneren hin gewölbt sind, wobei der Rampenabschnitt B konvex und der Rampenabschnitt D konkav gewölbt sen kann. Durch die konkave Wölbung des Rampenabschnittes D werden die Toleranzbedingungen zwischen dem Bolzen und der Mutter verbessert. Der Rampenabschnitt gemäß Fig. 7 stellt ein Kreissegment dar, und der Rampenabschnitt C bildet die Tangente an diesen Kreis. Der Rampenabschnitt B kann auch ein Segment aus einem parabelförmigen oder hyperbelförmigen Kurvenverlauf sein.

Durch diese Ausbildung wird erreicht, daß ein "Zurückrutschen" des sich auf den Rampenflächen aufpressenden und verformenden Grates des zugeordneten Gewindeteiles nicht erfolgen kann.

In Fig. 4 ist eine Mutter 2a dargestellt, die eine dreieckige Außenform aufweist. Durch diese Anordnung wird der radialen Ausdehnung der Mutter bei Einwirken des entsprechenden Druckes durch den Schraubbolzen entgegengewirkt.

In Fig. 5 ist eine Mutter 2b dargestellt, die eine fünfeckige Außenform aufweist, d. h. keine der Außenflächen des Randes der Mutter sind zu einer anderen Fläche parallel.

Fig. 6 zeigt einen Schnitt durch eine Mutter 2c. Diese Mutter besteht aus einem inneren Teil 17 und einem äußeren Verstärkungsteil 16, wobei das Verstärkungsteil 16 besonders Dehnungsresistent ist, während das innere Teil 17 plastischer oder elastischer ist, so daß eine plastische oder elastische Deformation möglich ist, die Voraussetzung für das Verriegelungsprinzip bzw. das Selbsthemmungsprinzip ist.

Es ist ersichtlich, daß bei der Ausführungsform gemäß Fig. 6 durch die Kombination unterschiedlicher Werkstoffe die Selbsthemmungswirkung optimiert werden kann. Gleichzeitig ergeben sich aber auch Möglichkeiten der Materialeinsparung und Vorteile bei der größenmäßigen Dimensionierung von Schraube und Mutter.

## Patentansprüche

1. Selbsthemmendes Gewinde an zwei miteinander durch Schraubung zu verbindenden Elementen, d. h. einem Bolzen (1) und einer Mutter (2), bei denen das Gewinde freilaufend ist, bis eine vorgegebene axiale Belastung einwirkt und einen Kontakt zwischen den Gewinden bewirkt, wobei der Gewindefuß (4) oder (5) wenigstens eines Elementes, wenigstens eine schräg zur Gewindeachse (A) verlaufende Klemmrampe (8) oder (9) aufweist, an der der Grat (5) oder (6) des anderen Elementes bei Ausübung eines entsprechenden Anzugmomentes angreift, dadurch gekennzeichnet, daß die Mutter aus einem inneren Teil und einem äußeren Verstärkungsteil besteht, wobei das Verstärkungsteil besonders dehnungsresistent ist, während das innere Teil eine plastische oder elastische Deformation ermöglicht.

2. Selbsthemmendes Gewinde nach Anspruch 1, dadurch gekennzeichnet, daß die Mutter (2) an ihrer Außenseite eckig mit ungerader Eckzahl ausgebildet ist, derart, daß die Außenseiten keine parallelen Flächen aufweisen.

3. Selbsthemmendes Gewinde nach Anspruch 2, dadurch gekennzeichnet, daß die Außenseite der Mutter (2) dreieckig ausgebildet ist.

4. Selbsthemmendes Gewinde nach Anspruch 2, dadurch gekennzeichnet, daß die Außenseite der Mutter (2) fünfeckig ausgebildet ist.

5. Selbsthemmendes Gewinde nach Anspruch 1, dadurch gekennzeichnet, daß die Auflageflächen (20, 21) der Mutter und/oder des Bolzens (1) eine konische oder sphärische Einbuchtung (22) aufweisen.

6. Selbsthemmendes Gewinde nach Anspruch 1, dadurch gekennzeichnet, daß die Klemmrampe (8, 9) aus unterschiedlich geneigten Abschnitten, (B, C, D) besteht, von denen ein Abschnitt (C) eine Neigung zwischen 5° und 30° gegenüber der Gewindeachse (A) aufweist, während der oder die angrenzenden Abschnitte (B) und/oder (D) gegenüber der Gewindeachse (A) eine größere Neigung als der Abschnitt (c) aufweisen.

7. Selbsthemmendes Gewinde nach Anspruch 6, dadurch gekennzeichnet, daß drei unterschiedlich geneigte Abschnitte (B, C, D) vorgesehen sind.

8. Selbsthemmendes Gewinde nach Anspruch 6 oder 7, dadurch gekennzeichnet, daß der oder die Abschnitte (B) und/oder (D) eine Neigung von etwa 60° ± 20° aufweisen.

9. Selbsthemmendes Gewinde nach Anspruch 6, dadurch gekennzeichnet, daß der mittlere Abschnitt (C) eine Neigung von 8 bis 15° aufweist.

10. Selbsthemmendes Gewinde nach einem der Ansprüche 6 bis 9, dadurch gekennzeichnet, daß die äußeren Abschnitte (B) und (D) geradlinig ausgebildet sind.

11. Selbsthemmendes Gewinde nach einem der Ansprüche 6 bis 10, dadurch gekennzeichnet, daß der mittlere Abschnitt (C) geradlinig ausgebildet ist.

12. Selbsthemmendes Gewinde nach einem der Ansprüche 6 bis 9, dadurch gekennzeichnet, daß der mittlere und/oder die äußeren Abschnitte (B, C, D) gewölbt ausgebildet sind.

13. Selbsthemmendes Gewinde nach einem der Ansprüche 6 bis 12, dadurch gekennzeichnet, daß der Übergang der Abschnitte (B, C, D) zueinander abgerundet ausgebildet ist.

## Claims

1. A self-locking thread on two members to be connected by screwing, i.e. a bolt (1) and a nut (2), in which the thread is free-running until a predetermined axial load acts and effects contact between the threads, the thread foot (4) or (5) of at least one member comprising at least one clamping ramp (8) or (9) running at an angle to the thread axis (A), on which clamping ramp (8) or (9) there acts the ridge (5) or (6) of the other member upon exertion of a corresponding clamping torque, characterized in that the nut consists of an inner part and an outer reinforcing part, the reinforcing part being especially extension resistent, while the inner part permits plastic or elastic deformation.

2. A self-locking thread according to claim 1, characterized in that the nut (2) is constructed on its outside polygonally with an uneven number of angles in such a way that the outer sides do not comprise any parallel faces.

3. A self-locking thread according to claim 2, characterized in that the outside of the nut (2) is of triangular construction.

4. A self-locking thread according to claim 2, characterized in that the outside of the nut (2) is of pentagonal construction.

5. A self-locking thread according to claim 1, characterized in that the bearing surfaces (20, 21) of the nut and/or of the bolt (1) comprise a conical or spherical indentation (22).

6. A self-locking thread according to claim 1, characterized in that the clamping ramp (8, 9) consists of portions (B,C,D,) inclined at different angles, one (C) of which portions is inclined by between 5° and 30° with respect to the thread axis (A), while the adjacent portion or portions (B) and/or (D) are at a greater angle with respect to the thread axis (A) than the portion (C).

7. A self-locking thread according to claim 6, characterized in that three differently inclined portions (B, C, D) are provided.

8. A self-locking thread according to claim 6 or claim 7, characterized in that the portion or portions (B) and/or (D) are inclined by approximately 60° ± 20°.

9. A self-locking thread according to claim 6, characterized in that the central portion (C) is inclined by from 8 to 15°.

10. A self-locking thread according to any one of claims 6 to 9, characterized in that the outer portions (B) and (D) are of rectilinear construction.

11. A self-locking thread according to any one of claims 6 to 10, characterized in that the central portion (C) is of rectilinear construction.

12. A self-locking thread according to any one of claims 6 to 9, characterized in that the central and/or outer portions (B, C, D) are of curved construction.

13. A self-locking thread according to any one of claims 6 to 12, characterized in that the transition between portions (B, C, D) is of rounded construction.

## Revendications

1. Filet autobloquant sur deux éléments devant être reliés entre eux par vissage, c'est-à-dire un boulon (1) et un écrou (2), dans lesquels le filet tourne librement jusqu'à ce qu'une contrainte axiale prédéterminée agisse et établisse un contact entre les filets, le pied de filet (4) ou (5) d'au moins l'un desdits éléments présentant au moins une rampe de serrage (8) ou (9) orientée obliquement par rapport à l'axe du filet (A), sur laquelle l'arête (5) ou (6) de l'autre élément se met en prise lorsqu'un couple de serrage approprié est exercé, caractérisé en ce que l'écrou se compose d'une partie intérieure et d'une partie de renfort extérieure, la partie de renfort étant particulièrement résistante à la dilatation, alors que la partie intérieure permet une déformation plastique ou élastique.

2. Filet autobloquant selon la revendication 1, caractérisé en ce que l'écrou (2) est de forme anguleuse avec un nombre impair d'angles sur son côté extérieur, de telle sorte que les côtés extérieurs ne présentent pas de surfaces parallèles.

3. Filet autobloquant selon la revendication 2, caractérisé en ce que le côté extérieur de l'écrou (2) est de forme triangulaire.

4. Filet autobloquant selon la revendication 2, caractérisé en ce que le côté extérieur de l'écrou (2) est de forme pentagonale.

5. Filet autobloquant selon la revendication 1, caractérisé en ce que les surfaces d'appui (20, 21) de l'écrou et/ou du boulon présentent un évidement (22) conique ou sphérique.

6. Filet autobloquant selon la revendication 1, caractérisé en ce que la rampe de blocage (8, 9) se compose de sections (B, C, D) d'inclinaisons différentes, dont l'une (C) présente une inclinaison comprise entre 5° et 30° par rapport à l'axe du filet (A), alors que la ou les sections limitrophes (B) et/ou (D) présentent par rapport à l'axe du filet (A) une plus grande inclinaison que la section (C).

7. Filet autobloquant selon la revendication 6, caractérisé en ce que trois sections (B, C, D) d'inclinaisons différentes sont prévues.

8. Filet autobloquant selon la revendication 6 ou 7, caractérisé en ce que la ou les' sections (B) et/ou (D) présentent une inclinaison d'environ 60° ± 20°.

9. Filet autobloquant selon la revendication 6, caractérisé en ce que la section moyenne (C) présente une inclinaison de 8° à 15°.

10. Filet autobloquant selon l'une ou l'ensemble des revendications 6 à 9 , caractérisé en ce que les sections extérieures (B) et (D) sont de forme rectiligne.

11. Filet autobloquant selon l'une ou l'ensemble des revendications 6 à 10, caractérisé en ce que la section médiane (C) est de forme rectiligne.

12. Filet autobloquant selon l'une ou l'ensemble des revendications 6 à 9, caractérisé en ce que la section médiane et/ou les sections extérieures (B, C, D) sont de forme courbe.

13. Filet autobloquant selon l'une ou l'ensemble des revendications 6 à 12, caractérisé en ce que la transition entre les sections (B, C, D) est de forme arrondie.
